# EUROPÄISCHE PATENTSCHRIFT

(11) **EP 2 134 538 B1**
(45) Veröffentlichungstag und Bekanntmachung des Hinweises auf die Patenterteilung: **30.11.2016**
(21) Anmeldenummer: 08706866.4
(22) Anmeldetag: 05.02.2008
(51) Int. Cl.: B23Q 5/58, F16P 5/00, B30B 1/14, B30B 15/28, F16P 7/02

(54) **ÜBERLASTSICHERUNG, ANTRIEBSSTRANG MIT EINER DERARTIGEN ÜBERLASTSICHERUNG, VORRICHTUNG MIT EINEM HUBWERKZEUG SOWIE VERFAHREN ZUM AUFBRINGEN VON ARBEITSKRÄFTEN**
OVERLOAD PROTECTION, DRIVE TRAIN COMPRISING SUCH AN OVERLOAD PROTECTION, DEVICE COMPRISING A LIFTING TOOL, AND METHOD FOR APPLYING WORKING FORCES
SYSTÈME DE PROTECTION CONTRE LES SURCHARGES, CHAÎNE CINÉMATIQUE COMPORTANT CE SYSTÈME DE PROTECTION CONTRE LES SURCHARGES, DISPOSITIF POURVU D'UN OUTIL DE LEVAGE, ET PROCÉDÉ D'APPLICATION DE FORCES DE TRAVAIL

(30) Priorität: 07.03.2007 DE 102007011489
(43) Veröffentlichungstag der Anmeldung: 23.12.2009
(73) Patentinhaber: Kiefel GmbH, 83395 Freilassing (DE)
(72) Erfinder: HUBER, Anton, A-5301 Eugendorf (AT); CREPAZ, Johannes, A-5071 Siezenheim (AT)
(74) Vertreter: Farago, Peter Andreas
(86) Internationale Anmeldenummer: PCT/DE2008/000203
(87) Internationale Veröffentlichungsnummer: WO 2008/106916

(56) Entgegenhaltungen:
- EP-A2- 0 995 543
- DE-A1- 19 940 908
- FR-A- 2 332 124
- FR-A- 2 368 353
- SU-A1- 556 052
- US-A- 2 532 850
- US-A- 4 923 382

## Beschreibung

Die Erfindung betrifft einerseits einen Antriebsstrang mit einem ersten Antriebsstrangglied und mit wenigstens einem weiteren Antriebsstrangglied, welche fest miteinander verbunden als Antriebsstrang zwischen einem Antrieb und einem Werkzeug angeordnet sind, wobei zwischen dem ersten Antriebsstrangglied und dem weiteren Antriebsstrangglied eine Überlastsicherung angeordnet ist. Die Erfindung betrifft ebenfalls eine Vorrichtung mit einem Hubwerkzeug zum Herstellen und/oder Bearbeiten eines Werkstückes, bei welcher das Hubwerkzeug mittels eines eine Überlastsicherung aufweisenden Antriebsstranges bewegbar in der Vorrichtung gelagert ist. Auch betrifft die Erfindung ein Verfahren zum Aufbringen von Arbeitskräften auf ein Hubwerkzeug, welches mittels auf vorgegebenen Bewegungsbahnen geführten Antriebsgliedern angetrieben wird, und bei welchem bei einer Antriebskräfteüberlast eine Überlastsicherung betätigt wird und hierdurch Antriebsglieder voneinander getrennt werden.

Gattungsgemäße Überlastsicherungen sind aus dem Stand der Technik in vielfältiger Gestalt bekannt und dienen insbesondere in Stanzmaschinen dazu, Bauteile beziehungsweise Bauteilgruppen bei einer Fehlfunktion vor einer irreparablen Zerstörung zu schützen, da bei derartigen Maschinen enorme Arbeitskräfte erzeugt Das Dokument EP 0 995 543 A2 offenbart eine Sicherheitseinrichtung zur Schadensminderung bei Kollisionen, für Werkzeugmaschinen, wobei eine Verbindung eine Sollbruchstelle mit einem Scherstift aufweist. Es kann zum Abbau von Bewegungsenergie eine Bremsstange parallel angebracht sein.

Das Dokument DE 199 40 908 A1 offenbart eine Steinsicherung für ein Bodenbearbeitungsgerät. Ein Schwert hat eine Drehachse, wobei ein Abreißbolzen vorgesehen ist, der einen am Ende einer bogenförmigen Führung angeordneten Führungsbolzen aufweist.

Es ist Aufgabe vorliegender Erfindung, bekannte Überlastsicherungen derart weiter zu entwickeln, dass an einer Vorrichtung zum Herstellen und/oder Bearbeiten eines Werkstückes, insbesondere an einem Antriebsstrang einer solchen Vorrichtung, Beschädigungen vermindert oder sogar vermieden werden.

Die Aufgabe der Erfindung wird von einem mit den Merkmalen des Anspruchs 1 gelöst, mit einer Überlastsicherung mit einem Krafteingangselement und mit einem Kraftausgangselement, welche mittels einer Formschlussverbindung kraftschlüssig miteinander starr verbunden und welche bei einer betätigten Überlastsicherung relativ bewegbar zueinander sind, wobei die Überlastsicherung eine Notlaufführung aufweist, mittels welcher das Krafteingangselement und das Kraftausgangselement bei betätigter Überlastsicherung relativ zueinander bewegbar, aber kontrolliert zueinander geführt miteinander verbunden sind, sowie mit den weiteren Merkmalen des Patentanspruchs 1.

Bekannte Antriebsstränge mit Überlastsicherung weisen eine derartige Notlaufführung nicht auf, so dass im Falle einer bestätigten Überlastsicherung Antriebsstrangglieder eines Antriebsstranges unkoordiniert zueinander bewegt werden, wodurch diese dann selbst und/oder umliegende Bereiche einer Maschine schwer beschädigt werden können. Dies ist vorliegend vermieden.

Mit dem Begriff "betätigte Überlastsicherung" wird vorliegend beschrieben, dass die Überlastsicherung auf Grund einer Überlastsituation, beispielsweise in einem Getriebe einer Presse, ausgelöst wurde, so dass eine Antriebsseite und eine Abtriebsseite arbeitskräftemäßig voneinander getrennt sind.

Der Begriff "Krafteingangselement" beschreibt vorliegend ein Bauteil der Überlastsicherung, mittels welchem Arbeitskräfte antriebsseitig in die Überlastsicherung eingeleitet werden. In einem baulich besonders einfachen Fall ist das Krafteingangselement identisch mit einem ersten Antriebsstrangglied, welches antriebsseitig im Antriebsstrang vorgesehen ist.

Dementsprechend bezeichnet der Begriff "Kraftausgangselement" ein Bauteil der vorliegenden Überlastsicherung, mittels welchem Antriebskräfte abtriebsseitig an ein Werkzeug weiter geleitet werden können. So bildet das Kraftausgangselement in einer baulich besonders einfachen Ausführungsvariante ein weiteres Antriebsstrangglied, welches abtriebsseitig beispielsweise einem Werkzeug, wie beispielsweise einem Hubwerkzeug, zugeordnet ist.

Die vorliegende Notlaufführung kann verschiedenartig ausgeführt sein, solange das Krafteingangselement und das Kraftausgangselement bei betätigter Überlastsicherung sicher zueinander geführt sind. Damit das Krafteingangselement und das Kraftausgangselement bei betätigter Überlastsicherung besonders betriebssicher zueinander geführt werden, ist es vorteilhaft, wenn die Notlaufführung entsprechende Führungsbahnen umfasst, entlang welcher das Krafteingangselement und das Kraftausgangselement bei betätigter Überlastsicherung eine kontrolliert geführte Relativbewegung zueinander ausführen können.

Insbesondere hinsichtlich Getriebegliedern zum Übertragen von Druck- und/oder Zugkräften ist es vorteilhaft, wenn die Überlastsicherung gerade Führungsbahnen aufweist, entlang derer das Krafteingangselement und das Kraftausgangselement geführt zueinander translatorische Relativbewegungen ausführen können, insbesondere eine ausschließlich translatorische Relativbewegung, da hierdurch die beiden Elemente entlang ihren Hauptkräfteachsen zueinander translatorisch bewegt werden können.

Die vorliegend beschriebene Formschlussverbindung, mittels welcher das Krafteingangselement und das Kraftausgangselement kraftschlüssig miteinander verbunden sind, kann vielfältiger Natur sein. Eine Formschlussverbindung ist aus dem Stand der Technik bereits bekannt, so dass vorliegend hierauf nur soweit eingegangen wird, dass es vorteilhaft ist, wenn die Formschlussverbindung ein vorgespanntes Auslösebauteil und/oder einen Scherstift aufweist, da ein Scherstift im Falle einer betätigten Überlastsicherung kostengünstig und einfach ausgetauscht und somit erneuert werden kann. Alternativ zu dem Scherstift könnte als Formschlussverbindung beispielsweise eine Bauteilgruppe mit einer vorgespannten Kugel oder ein anderes vorgespanntes Auslösebauteil Verwendung finden.

Damit ein Scherstift zum Übertragen der erforderlichen Arbeitskräfte nicht überdimensional ausgeführt sein muss, ist es vorliegend vorteilhaft, wenn das Krafteingangselement und das Kraftausgangselement mittels einer Reibschlussverbindung kraftschlüssig miteinander starr verbunden sind. Die erforderliche Kraftübertragung erfolgt bevorzugt über den Scherstift - oder ein anderweitiges Element zum auflösbaren Halten eines Kräftegleichgewichts - und zusätzlich über einen Reibschluss.

Eine diesbezügliche vorteilhafte Ausführungsvariante sieht vor, dass die Reibschlussverbindung zwei Spannelemente umfasst, zwischen denen das Krafteingangselement und das Kraftausgangselement verspannt werden.

Mit der Reibschlussverbindung ist sichergestellt, dass die Arbeitskräfte nicht vollständig von der Formschlussverbindung zwischen dem Eingangselement und dem Ausgangselement übertragen werden müssen. Vielmehr kann die Formschlussverbindung auch in Abhängigkeit der Reibschlussverbindung dimensioniert werden.

Damit bei einer betätigten Überlastsicherung eine Antriebsseite und eine Abtriebsseite eines Antriebsstranges insbesondere auf einer Hauptkräfteachse unbeschädigt relativ zueinander geführt bewegt werden können, ist es vorteilhaft, wenn das Krafteingangselement und das Kraftausgangselement um einen Crash-Abstand voneinander beabstandet miteinander verbunden sind.

Der Begriff "Crash-Abstand" beschreibt vorliegend einen Abstand zwischen dem Krafteingangselement und dem Kraftausgangselement, so dass beide Elemente eine Relativbewegung zueinander durchführen können. Beispielsweise ist hierdurch gewährleistet, dass eine Antriebsseite einen Arbeitshub durchführen kann, ohne dass die Abtriebsseite der Bewegung des Arbeitshubes wie im normalen Arbeitsbetrieb folgen muss. Es ist insbesondere denkbar, dass der Crashabstand in der Überlastsicherung als ein Freihub zwischen dem Krafteingangselement und dem Kraftausgangselement ausgestaltet ist, sodass nach Auslösung der Überlastsicherung der eingehende Arbeitshub vermindert an das Kraftausgangselement weitergegeben wird oder der eingehende Hub vollständig eliminiert wird, sodass im zweiten Falle der Antrieb "frei" dreht.

In der Erfindung sind das Krafteingangselement und das Kraftausgangselement kopfseitig zueinander angeordnet. Liegen die beiden Kraftelemente der Überlastsicherung derart gegenüber, baut die Überlastsicherung besonders kompakt, da die jeweiligen Kräftehauptachsen des Krafteingangselementes und des Kraftausgangselementes vorteilhaft parallel zueinander oder sogar koaxial liegen.

Dementsprechend sieht eine besonders bevorzugte Ausführungsvariante vor, dass das Krafteingangselement und das Kraftausgangselement Zugstäbe und/oder Druckstäbe in einem Antriebsstrang bilden.

Insbesondere kann der vorstehend beschriebene Crash-Abstand zwischen dem Krafteingangselement und dem Kraftausgangselement baulich besonders einfach vorgesehen werden, wenn das Krafteingangselement und das Kraftausgangselement eine Schubstange eines Antriebsstranges bilden.

Damit ein Überlastfall und damit ein Betätigen der Überlastsicherung unmittelbar registriert wird und ein Antrieb einer Arbeitsmaschine ausgeschaltet werden kann, ist es vorteilhaft, wenn die Überlastsicherung Sensoren umfasst, welche eine Relativbewegung zwischen dem Krafteingangselement und dem Kraftausgangselement registrieren. Sollten vorliegend Relativbewegungen zwischen dem Krafteingangselement und dem Kraftausgangselement einen kritischen Wert überschreiten, wird dies von den Sensoren sofort ermittelt und beispielsweise ein Notausbetrieb einer Maschine in Gang gesetzt. Vorliegende Sensoren können in vielfältiger Weise, insbesondere mit Mikroschaltern, Dehnmessstreifen oder beliebigen isolierten Kontakten realisiert sein.

Die gestellte Aufgabe wird nach dem ersten Erfindungsaspekt von einem Antriebsstrang mit einem ersten Antriebsstrangglied und mit wenigstens einem zweiten

Antriebsstrangglied, welche zwischen einem Antrieb und einem Werkzeug fest miteinander verbunden angeordnet sind, gelöst, wobei zwischen dem ersten Antriebsstrangglied und dem zweiten Antriebsstrangglied eine Überlastsicherung angeordnet ist und die Antriebsstrangglieder bei einer betätigten Überlastsicherung als Verbund aus relativ zueinander beweglich geführten Antriebsstranggliedern miteinander verbunden sind.

Vorteilhafter Weise bleiben die Antriebsstrangglieder, zwischen denen die Überlastsicherung vorgesehen ist, selbst bei einer betätigten Überlastsicherung als Verbund derart zueinander angeordnet, dass sie zueinander - insbesondere definiert - geführt sind und damit miteinander verbunden bleiben. Somit ist ausgeschlossen, dass arbeitskräftemäßig voneinander getrennte Antriebsstrangglieder unkontrolliert umherschlagen.

Damit die arbeitskräftemäßig getrennten Antriebsstrangglieder zueinander beweglich geführt werden können, ist es vorteilhaft, dass die Antriebsstrangglieder um einen Sicherheitsabstand beabstandet zueinander angeordnet sind. Mittels eines derartigen Sicherheitsabstandes ist gewährleistet, dass die eingangsseitig angeordneten Antriebsstrangglieder selbst nach einem Überlastfall unverändert einen Arbeitshub ausüben können, ohne hierbei weiterführenden Schaden anzurichten. Idealerweise ist der Sicherheitsabstand in Abhängigkeit vom Crashabstand derart gewählt, dass die ausgangsseitig angeordneten Antriebsstrangglieder keinen oder nur einen zu vernachlässigenden Hub ausführen.

Damit ein Hubwerkzeug bei betätigter Überlastsicherung keine oder nur unwesentliche Arbeitskräfte auf ein Werkstück überträgt, obwohl der Antrieb noch aktiv ist, ist es vorteilhaft, wenn der Crashabstand zumindest einem Arbeitshub entspricht, den der Antrieb oder ein Bauteil des Antriebes, wie beispielsweise eine Kurvenscheibe, während eines Arbeitsbewegungszyklus' bereitstellt. Wenn der Crashabstand größer als der Arbeitshub gewählt wird, ist die Gefahr verringert, dass ein Werkzeug weiter einen Hub ausführt, solange der Antrieb noch umläuft.

Um wirtschaftlich dimensionieren zu können, wird vorgeschlagen, dass der Crashabstand nicht mehr als 120 % des Arbeitshubes beträgt.

Um insbesondere das Werkzeug bei einer fehlerhaft laufenden Maschine vor Beschädigungen zu schützen, ist es vorteilhaft, wenn der Crashabstand mindestens 80 %, vorzugsweise mindestens 95 %, eines Arbeitshubes des Hubwerkzeuges entspricht.

Der Sicherheitsabstand zwischen dem eingangsseitigen Antriebsstrangglied und dem ausgangsseitigen Antriebsstrangglied sollte bevorzugt mindestens einer Längsausdehnung der Überlastsicherung in deren kürzester Ausdehnung entsprechen, also der Längsausdehnung bei ausgelöster Überlastsicherung.

Der vorliegend beschriebene Antriebsstrang, insbesondere die vorliegend beschriebene Überlastsicherung, kann insbesondere überall dort vorteilhaft eingesetzt werden, wo große Zug- beziehungsweise Druckkräfte zwischen miteinander wechselwirkenden Bauteilen auftreten. So ist es vorteilhaft, wenn der Antriebsstrang eine Kniehebelmechanik umfasst. Kniehebelmechaniken werden meist im Zusammenhang mit großen Arbeitskräften eingesetzt, so dass die vorliegende Erfindung besonders vorteilhaft mit Kniehebelmechaniken kombiniert werden kann.

Der vorliegende Antriebsstrang und die vorliegende Überlastsicherung eignen sich ebenfalls besonders gut im Zusammenhang mit einem Antrieb, der eine Kurvenscheibe oder eine Exzenterscheibe aufweist, da derartige Kurvenscheiben beziehungsweise Exzenterscheiben auf Grund ihrer hohen Massen selbst bei einer Störung in einem Antriebsstrang erst einmal nahezu ungebremst weiter rotieren. Mittels der vorliegenden Überlastsicherung beziehungsweise des vorliegenden Antriebsstranges ist jedoch gewährleistet, dass derartige Kurvenscheiben beziehungsweise Exzenterscheiben bis zu ihrem Stillstand weiter umlaufen können und hierbei einerseits ein Werkzeug keine Arbeitskräfte mehr auf ein Werkstück ausübt und andererseits antriebsseitige Antriebsstrangglieder gegenüber abtriebsseitigen Antriebsstranggliedern an der Überlastsicherung relativ geführt bewegt werden können, ohne hierbei ihre Umgebung zu beschädigen.

Baulich besonders einfach ist der Antriebsstrang aufgebaut, wenn die Antriebsstrangglieder eine Schubstange bilden. Mittels einer Schubstange lassen sich problemlos besonders hohe Arbeitskräfte übertragen.

Auf Grund der Vorteile vorliegender Überlastsicherung sieht eine bevorzugte Ausführungsvariante des Antriebstranges eine Überlastsicherung nach wenigstens einem der vorliegend erläuterten Merkmale vor.

Nach einem zweiten Aspekt der Erfindung wird die Aufgabe von einer Vorrichtung mit einem Hubwerkzeug zum Herstellen und/oder Bearbeiten eines Werkstückes gelöst, bei welcher das Hubwerkzeug mittels eines eine Überlastsicherung aufweisenden Antriebsstranges bewegbar in der Vorrichtung gelagert ist, wobei sich die Vorrichtung durch einen Antriebsstrang nach einem der vorstehend erläuterten Merkmale auszeichnet, und zwar gemäß der Merkmalskombination des Patentanspruchs 4. Somit können die Vorteile der vorliegenden Überlastsicherung und/oder des vorliegenden Antriebsstranges auch im Zusammenhang mit einer ein Hubwerkzeug aufweisenden Vorrichtung genutzt werden.

Verfahrenstechnisch wird die Aufgabe - gemäß einem dritten Aspekt der Erfindung - von einem Verfahren zum Aufbringen von Arbeitskräften auf ein Hubwerkzeug gelöst, welches mittels auf vorgegebenen Bewegungsbahnen geführten Antriebsgliedern angetrieben wird, und bei welchem bei einer Antriebskräfteüberlast eine Überlastsicherung betätigt wird, wodurch Antriebsglieder voneinander getrennt werden, wobei die Antriebsglieder bei betätigter Überlastsicherung lediglich arbeitskräftemäßig getrennt werden, und an der Überlastsicherung Führungskräfte zwischen den getrennten Antriebsgliedern wechselwirken, und zwar gemäß den Merkmalen des Patentanspruchs 10. Vorteilhafter Weise sind die arbeitskräftemäßig getrennten Antriebsglieder zueinander derart verbunden, dass zwischen ihnen Führungskräfte wirken, so dass die getrennten Antriebsglieder nicht führungslos im Trennbereich sind.

Eine Verfahrensvariante sieht vor, dass die getrennten Antriebsglieder im Trennbereich im Wesentlichen entlang der vorgegebenen Bewegungsbahnen geführt werden.

Besonders vorteilhaft ist es, wenn das Hubwerkzeug bei betätigter Überlastsicherung keinerlei Hub oder einen Nebenhub ausführt.

Der Begriff "Nebenhub" bezeichnet eine Bewegung des Hubwerkzeuges, die keinen vollständigen Arbeitshub beschreibt, so dass die Gefahr verringert ist, dass das Hubwerkzeug bei betätigter Überlastsicherung beschädigt wird. Zudem kann das Hubwerkzeug trotz der betätigten Überlastsicherung noch bewegt werden, um es beispielsweise in eine Start- oder Wartungsposition zu verfahren.

Die Erfindung wird nachstehend anhand einer exemplarischen Vorrichtung zum Herstellen und Bearbeiten von Werkstücken mit einer Überlastsicherung in einem Antriebsstrang unter Bezugnahme auf die Zeichnung weiter erläutert. Es zeigen
- Figur 1: grob schematisch eine Ansicht einer Formanlage mit einer Überlastsicherung zwischen einer Antriebsseite und einer Abtriebsseite,
- Figur 2: schematisch eine perspektivische Ansicht der Überlastsicherung aus Figur 1,
- Figur 3: schematisch eine Seitenansicht der Überlastsicherung aus den Figuren 1 und 2 und
- Figur 4: schematisch eine Explosionsansicht der Überlastsicherung aus den Figuren 1 bis 3.

Die Formanlage 1 mit einem feststehenden Oberwerkzeug 2, welches ein Form- und Stanzwerkzeugoberteil 3 aufweist, und mit einem translatorisch bewegbaren Unterwerkzeug 4, welches ein Form- und Stanzwerkzeugunterteil 5 aufweist, dient beispielsweise dazu, Kunststoffbecher mittels eines ersten Arbeitshubteilschrittes zu formen und nach dem Abkühlen der hierzu verwendeten Formmasse mittels eines weiteren Arbeitsteilhubes als Kunststoffbecher auszustanzen. Der vorliegend beschriebene Arbeitshub erfolgt gemäß dem Doppelpfeil 6 entlang einer Bewegungsrichtung, entlang welcher das translatorisch bewegbare Unterwerkzeug 4 bewegt wird.

Angetrieben wird die Formanlage 1 mittels eines Motors (nicht dargestellt), der über eine Antriebswelle 7 eine Exzenterscheibe 8 in Rotationsrichtung 9 antreibt. Um die Rotationsbewegung 9 der Exzenterscheibe 8 in translatorische Bewegungsrichtungen gemäß dem Doppelpfeil 6 umzuwandeln, ist zwischen der Exzenterscheibe 8 und dem translatorisch bewegbaren Unterwerkzeug 4 ein Getriebe 10 vorgesehen, welches im Wesentlichen aus einer Kniehebelmechanik 11 und einer Schubstange 12 besteht.

Vorliegend ist ein erster Kniehebel 13 gelenkig an dem translatorisch bewegbaren Unterwerkzeug 4 und ein zweiter Kniehebel 14 gelenkig an einem Maschinengehäuse 15 befestigt. Untereinander sind die beiden Kniehebel 13 und 14 in einem Kniegelenk 16 verbunden, wobei in dem Kniegelenk 16 zusätzlich die Schubstange 12 befestigt ist.

Die Schubstange 12 ist zweigeteilt und besteht aus einem ersten Schubstangenglied 17 und einem zweiten Schubstangenglied 18, zwischen denen die Überlastsicherung 19 angeordnet ist.

Die Überlastsicherung dient dazu, insbesondere das Getriebe und die Form- und Stanzwerkzeugteile 3 und 5 bei einer auftretenden Überlast vor einer Beschädigung zu schützen.

Vorliegend stellen der Motor, die Antriebswelle 7, die Exzenterscheibe 8 und das erste Schubstangenglied 17 eine Antriebsseite 20 der Maschine 1 dar, während im Wesentlichen das translatorisch bewegbare Unterwerkzeug 4, die Kniehebelmechanik 11 und das zweite Schubstangenglied 18 die Abtriebsseite 21 der Formanlage 1 hinsichtlich der Überlastsicherung 19 bilden.

Mittels der Überlastsicherung 19 ist gewährleistet, dass die Exzenterscheibe 8 zumindest so lange umlaufen kann, wie ihr kinetische Energie innewohnt, ohne bei betätigter Überlastsicherung 19 die Kniehebelmechanik 11 derart zu bewegen, dass die Arbeitskräfte auf das translatorisch bewegbare Unterwerkzeug 4 wirken.

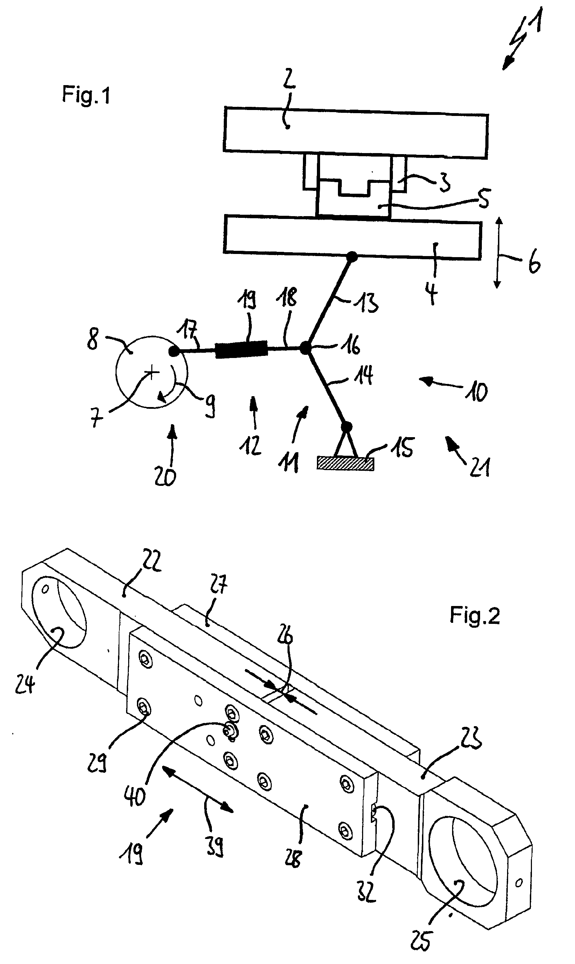

Hierzu ist die Überlastsicherung 19 folgendermaßen aufgebaut (vgl. die Figuren 2 bis 4):
Die Überlastsicherung 19 weist ein Krafteingangselement 22 auf, welches durch das erste Schubstangenglied 17 (vgl. Figur 1) bereitgestellt wird. Darüber hinaus weist die Überlastsicherung ein Kraftausgangselement 23 auf, welches durch das zweite Schubstangenglied 18 (vgl. Figur 1) bereitgestellt wird. Das Krafteingangselement 22 ist mittels eines ersten Lagerauges 24 an der Exzenterscheibe 8 gelagert, während das Kraftausgangselement 23 mittels eines zweiten Lagerauges 25 am Kniegelenk 16 gelagert ist. Sowohl zwischen Krafteingangselement 22 und Exzenterscheibe als auch zwischen Kraftausgangselement 23 und Kniegelenk 16 können Zwischenelemente vorgesehen sein.

Das Krafteingangselement 22 und das Kraftausgangselement 23 sind kopfseitig auf Stoß, jedoch in einem Crash-Abstand 26, zueinander angeordnet und untereinander reibschlüssig mittels einer ersten Klemmplatte 27 und einer symmetrisch gestalteten zweiten Klemmplatte 28 miteinander verklemmt. Zum Aufbringen erforderlicher Klemmkräfte zwischen den beiden Klemmplatten 27 und 28 und dem Krafteingangselement 22 einerseits sowie den beiden Klemmplatten 27 und 28 und dem Kraftausgangselement 23 andererseits sind an der Überlastsicherung 19 eine Vielzahl von Klemmschrauben 29 (exemplarisch gekennzeichnet) vorgesehen.

Damit das Krafteingangselement 22 und das Kraftausgangselement 23 gegenüber den Klemmplatten 27 und 28 - und damit auch zueinander - sicher gehalten und geführt sind, sind am Krafteingangselement 22 erste Horizontalpassfedern 30 und erste Vertikalpassfedern 31 und am Kraftausgangselement 23 zweite Horizontalpassfedern 32 und zweite Vertikalpassfedern 33 angeordnet. Alle Passfedern 30 bis 33 sind beidseitig und in bekannter Weise mittels Passfederschrauben 34 (exemplarisch beziffert) an dem Krafteingangselement 22 beziehungsweise an dem Kraftausgangselement 23 angeschraubt.

Die ersten Horizontalpassfedern 30 korrespondieren mit ersten Horizontalpassfedernuten 35, die ersten Vertikalpassfedern 31 mit ersten Vertikalpassfedernuten 36, die zweiten Horizontalpassfedern 32 mit zweiten Horizontalpassfedernuten 37 und die zweiten Vertikalpassfedern 33 mit zweiten Vertikalpassfedernuten 38, so dass alle Bauteile, also Krafteingangselement 22, Kraftausgangselement 23, erste Klemmplatte 27 und zweite Klemmplatte 28, definiert zueinander gehalten und geführt sind.

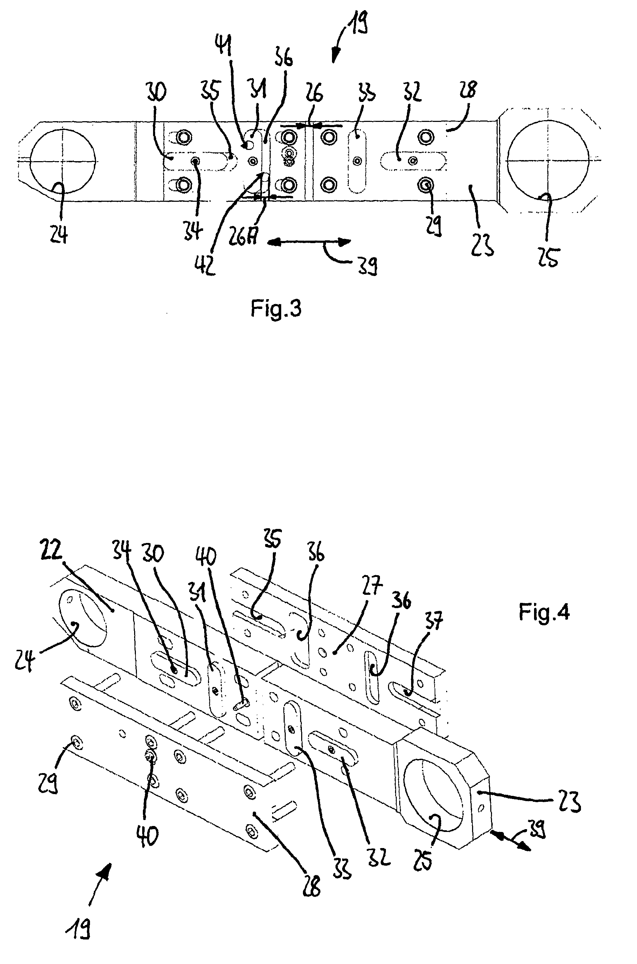

Damit im Falle einer Überlast die Überlastsicherung 19 betätigt werden kann und das Krafteingangselement 22 gegenüber dem Kraftausgangselement 23 eine geführte Relativbewegung, nämlich im Rahmen des Crash-Abstandes 26, durchführen kann, sind die ersten Horizontalpassfedernuten 35 und die ersten Vertikalpassfedernuten 36 in Axialrichtung 39 der Überlastsicherung 19 um den Crash-Abstand 26 größer ausgebildet als die mit ihnen korrespondierenden Horizontalpassfedern 30 und Vertikalpassfedern 31, also die ersten Horizontalpassfedernuten 35 länger und die ersten Vertikalpassfedernuten 36 breiter (vgl. insbesondere Figur 3, in welcher das Krafteingangselement 22 und das Kraftausgangselement 23 mit der zweiten Klemmplatte 28 schematisch übereinander dargestellt sind).

Wenn der stirnseitige Abstand des Krafteingangselements vom Kraftausgangselement größer oder kleiner ist als das Spiel der Passfedern in ihren Nuten, definiert sich der Crashabstand als das kleinere der beiden Maße. Bevorzugt sind die beiden Maße jedoch zumindest annähernd gleich.

Eine Relativbewegung des Krafteingangselementes 22 zu dem Kraftausgangselement 23 und den beiden Klemmplatten 27 und 28 ist erst dann möglich, wenn ein Scherstift 40 der Überlastsicherung 19 auf Grund von Überlastkräften abgeschert wurde. Erst in diesem Fall ist das Krafteingangselement 22 frei, um gegenüber dem Kraftausgangselement 23 gemäß dem Crash-Abstand 26 einen freien Hub 26A auszuführen.

Der Scherstift 40 kann auch beidseitig an dem Krafteingangselement 22 angeordnet sein, so dass ein Scherstift mit der ersten Klemmplatte 27 und ein Scherstift mit der zweiten Klemmplatte 28 wechselwirkt.

Damit das Betätigen der Überlastsicherung 19 unmittelbar an das Motor- beziehungsweise Antriebsmanagement der vorliegenden Press- und Stanzmaschine 1 angezeigt werden kann, sind insbesondere im Bereich der ersten Vertikalpassfedernuten 36 und der entsprechenden ersten Vertikalpassfedern 31 Bewegungssensoren 41 und 42 vorgesehen, die sofort registrieren und ein entsprechendes Signal weiterleiten, wenn sich die ersten Vertikalpassfedern 31 des Krafteingangselements 22 gegenüber den ersten Vertikalpassfedernuten 36 der ersten Klemmplatte 27 und der zweiten Klemmplatte 28 bewegen.

Die hier beschriebenen ersten Horizontalpassfedern 30, die ersten Vertikalpassfedern 31 und die damit korrespondierenden ersten Horizontalpassfedernuten 35 und die ersten Vertikalpassfedernuten 36 bilden in ihrem Zusammenspiel die Notlaufführung der Überlastsicherung 19, mittels welcher das Krafteingangselement 22 und das Kraftausgangselement 23 bei betätigter Überlastsicherung 19 geführt eine Relativbewegung zueinander ausführen können. Insbesondere sind durch diese Bauteile gerade Führungsbahnen auf baulich besonders einfache Weise bereit gestellt, so dass das Krafteingangselement 22 und das Kraftausgangselement 23 geführt zueinander translatorisch bewegt werden können.

### Bezugszeichen:

- 1: Formanlage
- 2: feststehendes Oberwerkzeug
- 3: Form- und Stanzwerkzeugoberteil
- 4: translatorisch bewegbares Unterwerkzeug
- 5: Form- und Stanzwerkzeugunterteil
- 6: Doppelpfeil
- 7: Antriebswelle
- 8: Exzenterscheibe
- 9: Rotationsrichtung 10 Getriebe
- 11: Kniehebelmechanik
- 12: Schubstange
- 13: erster Kniehebel
- 14: zweiter Kniehebel
- 15: Maschinengehäuse
- 16: Kniegelenk
- 17: erstes Schubstangenglied
- 18: zweites Schubstangenglied
- 19: Überlastsicherung
- 20: Antriebsseite
- 21: Abtriebsseite
- 22: Krafteingangselement
- 23: Kraftausgangselement
- 24: erstes Lagerauge
- 25: zweites Lagerauge
- 26: Crash-Abstand
- 26A: freier Hub
- 27: erste Klemmplatte
- 28: zweite Klemmplatte
- 29: Klemmschrauben
- 30: erste Horizontalpassfedern
- 31: erste Vertikalpassfedern
- 32: zweite Horizontalpassfedern
- 33: zweite Vertikalpassfedern
- 34: Passfederschrauben
- 35: erste Horizontalpassfedernuten
- 36: erste Vertikalpassfedernuten
- 37: zweite Horizontalpassfedernuten
- 38: zweite Vertikalpassfedernuten
- 39: Axialrichtung
- 40: Scherstift
- 41: Sensoren
- 42: Sensoren

## Patentansprüche

1. Antriebsstrang mit einem ersten Antriebsstrangglied und mit wenigstens einem zweiten Antriebsstrangglied, welche zwischen einem Antrieb und einem Werkzeug fest miteinander verbunden angeordnet sind, wobei zwischen dem ersten Antriebsstrangglied und dem zweiten Antriebsstrangglied eine Überlastsicherung (19) angeordnet ist, wobei
die Antriebsstrangglieder bei einer betätigten Überlastsicherung (19) als Verbund aus relativ zueinander beweglich geführten Antriebsstranggliedern miteinander verbunden sind,
***dadurch gekennzeichnet*, *dass***
die Antriebsstrangglieder um einen Sicherheitsabstand beabstandet zueinander angeordnet sind,
wobei der Sicherheitsabstand mindestens einem Antriebshub entspricht, den der Antrieb oder ein Bauteil des Antriebes, wie beispielsweise eine Kurvenscheibe, während eines Arbeitsbewegungszyklus' bereitstellt,
wobei die Überlastsicherung (19) ein Krafteingangselement (22) und ein Kraftausgangselement (23) aufweist, welche mittels einer Formschlussverbindung kraftschlüssig miteinander starr verbunden und welche bei einer betätigten Überlastsicherung relativ bewegbar zueinander sind,
wobei das Krafteingangselement (22) und das Kraftausgangselement (23) kopfseitig zueinander angeordnet sind,
wobei eine Notlaufführung vorgesehen ist, mittels welcher das Krafteingangselement (22) und das Kraftausgangselement (23) bei betätigter Überlastsicherung (19) kontrolliert zueinander geführt miteinander verbunden sind.

2. Antriebsstrang nach Anspruch 1, ***dadurch gekennzeichnet, dass*** der Crashabstand mindestens 80 %, vorzugsweise mindestens 95 %, bevorzugt mindestens 100 %, insbesondere höchstens 120 %, eines Arbeitshubes des Hubwerkzeuges entspricht.

3. Antriebsstrang nach einem der Ansprüche 1 oder 2, ***dadurch gekennzeichnet, dass*** der Antriebsstrang eine Kniehebelmechanik (11) umfasst.

4. Vorrichtung mit einem Hubwerkzeug zum Herstellen und/oder Bearbeiten eines Werkstückes, bei welcher das Hubwerkzeug mittels eines eine Überlastsicherung (19) aufweisenden Antriebstranges bewegbar in der Vorrichtung gelagert ist,
***gekennzeichnet durch***
einen Antriebsstrang nach einem der vorstehenden Ansprüche.

5. Vorrichtung nach Anspruch 4, ***dadurch gekennzeichnet, dass*** die Notlaufführung der Überlastsicherung (19) Führungsbahnen, vorzugsweise gerade Führungsbahnen, aufweist, entlang derer das Krafteingangselement (22) und das Kraftausgangselement (23) geführt zueinander eine translatorische Relativbewegung ausführen können.

6. Vorrichtung nach Anspruch 5, ***dadurch gekennzeichnet, dass*** die Formschlussverbindung der Überlastsicherung (19) ein vorgespanntes Auslösebauteil und/oder einen Scherstift (40) umfasst.

7. Vorrichtung nach Anspruch 5 oder 6, ***dadurch gekennzeichnet, dass*** das Krafteingangselement (22) und das Kraftausgangselement (23) der Überlastsicherung (19) mittels einer Reibschlussverbindung kraftschlüssig miteinander starr verbunden sind.

8. Vorrichtung nach Anspruch 7, ***dadurch gekennzeichnet, dass*** die Reibschlussverbindung zwei Spannelemente umfasst, zwischen denen das Krafteingangselement (22) und das Kraftausgangselement (23) verspannt sind.

9. Vorrichtung nach einem der Ansprüche 5 bis 8, ***dadurch gekennzeichnet*, *dass*** das Krafteingangselement (22) und das Kraftausgangselement (23) um einen Crash-Abstand (26) voneinander beabstandet miteinander verbunden sind.

10. Verfahren zum Aufbringen von Arbeitskräften auf ein Hubwerkzeug in einer Vorrichtung nach einem der Ansprüche 4 bis 9, welches mittels auf vorgegebenen Bewegungsbahnen geführten Antriebsgliedern angetrieben wird und bei welchem bei einer Antriebskräfteüberlast eine Überlastsicherung (19) betätigt wird, wodurch Antriebsglieder voneinander getrennt werden,
***dadurch gekennzeichnet dass***
die Antriebsglieder bei betätigter Überlastsicherung (19) lediglich arbeitskräftemäßig getrennt werden und an der Überlastsicherung (19) Führungskräfte zwischen den getrennten Antriebsgliedern wechselwirken.

11. Verfahren nach Anspruch 10, ***dadurch gekennzeichnet, dass*** das Hubwerkzeug bei betätigter Überlastsicherung (19) keinen Hub oder einen Nebenhub ausführt.

## Claims

1. Drive train having a first drive train member and at least a second drive train member, which are arranged integrally connected to each other between a drive and a tool, an overload protection device (19) being arranged between the first drive train member and the second drive train member, wherein
the drive train members are interconnected with an activated overload protection device (19) as a composite of drive train members which are movably guided in relation to each other,
**characterized in that**
the drive train members are arranged mutually spaced by a safety space,
the safety space corresponds at least to a drive stroke provided by the drive or a component of the drive, such as, for instance, a cam plate, during an operation movement cycle,
the overload protection device (19) having a power input element (22) and a power output element (23) which are frictionally rigidly interconnected by means of positive engagement and which are movable with respect to each other in case of an activated overload protection device,
where the power input element (22) and the power output element (23) are arranged facing each other at their front sides,
an emergency operation guide being provided by means of which the power input element (22) and the power output element (23) are interconnected in a manner mutually controlled and guided when the overload protection device (19) is activated.

2. Drive train according to Claim 1, **characterized in that** the crash distance corresponds to at least 80%, preferably at least 95%, preferably at least 100%, in particular at the most 120%, of an operating stroke of the stroke tool.

3. Drive train according to one of Claims 1 or 2, **characterized in that** the drive train comprises a toggle lever mechanism (11).

4. Device having a stroke tool for manufacturing and/or processing a workpiece, with the stroke tool being arranged movably in the device by means of a drive train having an overload protection device (19),
**characterized by**
a drive train according to one of the above Claims.

5. Device according to Claim 4, **characterized in that** the emergency operation guide of the overload protection device (19) has guiding ways, preferably straight guiding ways, along which the power input element (22) and the power output element (23) can perform a translational relative movement in a mutually guided manner.

6. Device according to Claim 5, **characterized in that** the positive engagement of the overload protection device (19) comprises a pretensioned actuation component and/or a shearing pin (40).

7. Device according to Claim 5 or 6, **characterized in that** the power input element (22) and the power output element (23) of the overload protection device (19) are frictionally rigidly interconnected by means of a frictional connection.

8. Device according to Claim 7, **characterized in that** the frictional connection comprises two tensioning elements between which the power input element (22) and the power output element (23) are pre-stressed.

9. Device according to one of Claims 5 through 8, **characterized in that** the power input element (22) and the power output element (23) are interconnected spaced from each other by a crash distance (26).

10. Method for applying operating forces to a stroke tool in a device according to one of Claims 4 through 9, which is driven by means of drive members guided on predetermined movement paths and with which in case of a driving force overload an overload protection device (19) is activated, separating driving members from one another,
**characterized in that**
with the overload protection device (19) activated, the driving members are separated merely in terms of their operating forces, and guiding forces between the separated driving members interact in the overload protection device (19).

11. Method according to Claim 10, **characterized in that** with the overload protection device (19) activated, the stroke tool does not perform a stroke or an auxiliary stroke.

## Revendications

1. Chaîne cinématique comprenant un premier membre de chaîne cinématique et au moins un second membre de chaîne cinématique, lesquels sont disposés en étant reliés fixement entre eux entre un entraînement et un outil, dans lequel une protection contre la surcharge (19) est disposée entre le premier membre de chaîne cinématique et le second membre de chaîne cinématique, dans lequel
les membres de chaîne cinématique, lorsque la protection contre la surcharge (19) est actionnée, sont reliés entre eux en tant qu'assemblage de membres de chaîne cinématique dirigés en étant mobiles l'un par rapport à l'autre,
**caractérisée en ce que**
les membres de la chaîne cinématique sont disposés à distance l'un par rapport à l'autre sur une distance de sécurité,
dans lequel la distance de sécurité correspond au moins à une course d'entraînement que l'entraînement ou un composant de l'entraînement, comme une came, fournit pendant un cycle de déplacement de travail,
dans lequel la protection contre la surcharge (19) présente un élément d'introduction de force (22) et un élément d'évacuation de force (23) qui sont reliés fixement entre eux par adhérence de force par accouplement mécanique et qui peuvent être déplacés l'un par rapport à l'autre lorsque la protection contre la surcharge est actionnée,
dans lequel l'élément d'introduction de force (22) et l'élément d'évacuation de force (23) sont disposés côté tête l'un par rapport à l'autre,
dans lequel une exécution d'urgence est prévue, au moyen de laquelle l'élément d'introduction de force (22) et l'élément d'évacuation de force (23) sont reliés entre eux en étant dirigés de façon contrôlée l'un par rapport à l'autre lorsque la protection contre la surcharge (19) est actionnée.

2. Chaîne cinématique selon la revendication 1, **caractérisée en ce que** la distance d'accident correspond à au moins 80 %, particulièrement au moins 95 %, de préférence au moins 100 %, en particulier au plus à 120 % d'une course de travail de l'outil de levage.

3. Chaîne cinématique selon la revendication 1 ou 2, **caractérisée en ce que** la chaîne cinématique comprend une mécanique à genouillère (11).

4. Dispositif comprenant un outil de levage pour fabriquer et/ou usiner une pièce, dans lequel l'outil de levage est disposé mobile dans le dispositif, au moyen d'une chaîne cinématique présentant une protection contre la surcharge (19),
**caractérisé par**
une chaîne cinématique selon l'une des revendications précédentes.

5. Dispositif selon la revendication 4, **caractérisé en ce que** l'exécution d'urgence de la protection contre la surcharge (19) présente des trajectoires de guidage, de préférence des trajectoires de guidage droites, le long desquelles l'élément d'introduction de force (22) et l'élément d'évacuation de force (23) peuvent exécuter un mouvement relatif de translation dirigés l'un par rapport à l'autre.

6. Dispositif selon la revendication 5, **caractérisé en ce que** l'accouplement mécanique de la protection contre la surcharge (19) comprend un composant de déclenchement pré-contraint et/ou une goupille de cisaillement (40).

7. Dispositif selon la revendication 5 ou 6, **caractérisé en ce que** l'élément d'introduction de force (22) et l'élément d'évacuation de force (23) de la protection contre la surcharge (19) sont reliés fixement entre eux par adhérence de forces au moyen d'une liaison par friction.

8. Dispositif selon la revendication 7, **caractérisé en ce que** la liaison par friction comprend deux éléments de serrage entre lesquels l'élément d'introduction de force (22) et l'élément d'évacuation de force (23) sont tendus.

9. Dispositif selon l'une des revendications 5 à 8, **caractérisé en ce que** l'élément d'introduction de force (22) et l'élément d'évacuation de force (23) sont reliés entre eux en étant espacés d'une distance d'accident (26).

10. Procédé pour appliquer des forces de travail sur un outil de levage dans un dispositif selon l'une des revendications 4 à 9, lequel est entraîné au moyen de membres d'entraînement dirigés sur des trajectoires de déplacement prédéfinies, et dans lequel une protection contre la surcharge (19) est activée en cas de surcharge de force motrice, moyennent quoi des membres d'entraînement sont séparés l'un de l'autre,
**caractérisé en ce que**
les membres d'entraînement, lorsque la protection contre la surcharge (19) est activée, sont seulement séparés au niveau de la force de travail, et sur la protection contre la surcharge (19), des forces de guidage interagissent entre les membres d'entraînement séparés.

11. Procédé selon la revendication 10, **caractérisé en ce que** l'outil de levage n'effectue pas de course ni de course secondaire si la protection contre la surcharge (19) est activée.
